# EUROPEAN PATENT SPECIFICATION

(11) **EP 3 803 209 B1**
(45) Date of publication and mention of the grant of the patent: **06.07.2022**
(21) Application number: 19705542.9
(22) Date of filing: 22.02.2019
(51) Int. Cl.: F23D 14/14, C04B 35/565

(54) **CONTINUOUS COMPOSITE SURFACE AND BURNER SURFACE**
KONTINUIERLICHE KOMPOSITOBERFLÄCHE UND BRENNEROBERFLÄCHE
SURFACE COMPOSITE CONTINUE ET SURFACE DE BRÛLEUR

(30) Priority: 31.05.2018 EP 18382378
(43) Date of publication of application: 14.04.2021
(73) Proprietor: ORKLI, S. COOP., 20240 Ordizia (Gipuzkoa) (ES)
(72) Inventor: GONZÁLEZ SALVADOR, Francisco Javier, 20240 Ordizia, Gipuzkoa (ES); HERNÁNDEZ CONDE, Iñigo, 20240 Ordizia, Gipuzkoa (ES); BORONAT ELIZALDE, Marco, 20240 Ordizia, Gipuzkoa (ES); SCHLORDT, Tobias, 95440 Bayreuth (DE); MARTIN, Bernd, 95440 Bayreuth (DE); KNOHL, Stefan, 95440 Bayreuth (DE); KRENKEL, Walter, 95440 Bayreuth (DE); HELD, Alexander, 95440 Bayreuth (DE); PUCHAS, Georg, 95440 Bayreuth (DE)
(74) Representative: ABG Intellectual Property Law, S.L.
(86) International application number: PCT/EP2019/054424
(87) International publication number: WO 2019/228683

(56) References cited:
- WO-A1-95/19943
- US-A- 4 878 837
- US-A- 5 840 221
- US-A1- 2004 132 607
- US-A1- 2010 279 007
- US-B2- 8 215 951

## Description

### FIELD OF THE INVENTION

The present invention relates to the area of burner surfaces. More specifically, the present invention relates to a continuous composite surface, a burner surface, a burner assembly, methods for preparing the same and their uses.

### BACKGROUND

Ceramic materials have good thermal properties and are useful for several applications wherein resistance to high temperatures is required, being common materials in the composition of burner surfaces together with metals. However, burner surfaces comprising ceramic and/or metal burner plates have deficiencies related to high pressure drop or high thermal mass that cause burner inefficiency, unwanted emissions such as NOₓ, and fragility. The use of ceramic fibers to create porous burner surfaces overcomes part of these issues. Therefore, perforated plates for burner surfaces formed from ceramic fibers have been disclosed in numerous documents such as Patent Application No. WO2006/071481A1, U.S. Patent No. 5,595,816, Patent Application No. JPH0914615A1 and U.S. Pat No. 4878837.

Patent Application No. WO2006/071481A1 describes burner plates comprising a self-supporting substrate having perforations and comprising ceramic fibers and an inorganic oxide coating of inorganic oxide platelets. However, inorganic coatings comprising platelets reduce the porosity of the burner surface and increase its fragility.

U.S. Pat. No. 5595816 describes perforated burner plates formed from chopped ceramic fibers and colloidal silica or alumina by pressurized filtration using a mold with pins. Additionally, Patent Application No. JPH0914615A1 describes a method for producing a perforated combustion plate for a burner that comprises silicon carbide fibers and a silicon carbide layer. Said method comprises compressing a dispersion of silicon carbide fibers by using a male mold with protrusions. Nevertheless, methods for producing burner surfaces wherein apertures are generated during fiber deposition as those disclosed in U.S. Pat. No. 5595816 and in Patent Application No. JPH0914615A1, have several issues as demolding can damage the burner surface. Additionally, molds comprising protrusions are expensive increasing the global cost of the process. Last but not least, U.S. Pat. No. 4878837 discloses a continuous composite surface, obtainable by the method comprising the steps of: providing a dispersion comprising ceramic fibers, a first binder (i.e. aluminium nitrate) and a solvent (i.e. water or alcohols) and suctioning said dispersion through a frame (necessarily provided for carrying out the controlled vacuum pulling) to obtain a nonwoven layer comprising said ceramic fibers and said first binder, wherein said frame has no protrusions.

Therefore, there is a clear need for new materials and burner surfaces with high quality, performance, strength and durability characteristics and reduced manufacturing cost.

### BRIEF DESCRIPTION OF THE INVENTION

The authors of the present invention have developed a continuous composite, a burner surface, a burner assembly and a method for the preparation of a continuous composite, a method for the preparation of a burner surface, the use of a burner surface and the use of a burner assembly.

In particular, it has been observed that a burner surface comprising the continuous composite surface of the present invention and perforations has surprisingly a structural integrity significantly improved over previous designs.

In addition, since the method for the preparation of a continuous composite surface of the present invention is a simple and inexpensive procedure, it can be applied for large-scale production of continuous composite surfaces and burner surfaces.

Therefore, a first aspect of the invention is directed to a continuous composite surface, obtainable by the method comprising the steps of:
i) providing a dispersion comprising
   a. ceramic fibers;
   b. at least one polymeric first binder; and
   c. a solvent;
ii) suctioning said dispersion through a frame to obtain a nonwoven layer comprising said ceramic fibers and said at least one polymeric first binder, wherein said frame has no protrusions;
iii) heating said nonwoven layer obtained in step (ii) at a temperature high enough to decompose said at least one polymeric first binder from said nonwoven layer to obtain a nonwoven fabric; and
iv) coating by vapor deposition the nonwoven fabric obtained in step (iii) with a second binder to obtain a continuous composite surface.

In a second aspect, the present invention is directed to a burner surface obtainable by the method comprising the steps of
i) providing the continuous composite surface as defined above; and
ii) perforating the continuous composite surface to obtain a burner surface.

In a third aspect, the present invention is directed to a burner assembly comprising
- a housing having a plenum chamber;
- a gas inlet port connected to the housing; and
- the burner surface as defined above.

In a further aspect, the present invention is directed to a method for the preparation of a continuous composite surface comprising the steps of:
i) providing a dispersion comprising
   a. ceramic fibers;
   b. at least one polymeric first binder; and
   c. a solvent
ii) suctioning said dispersion through a frame to obtain a nonwoven layer comprising said ceramic fibers and said at least one polymeric first binder; wherein said frame has no protrusions;
iii) heating said nonwoven layer obtained in step (ii) at a temperature high enough to decompose said at least one polymeric first binder from said nonwoven layer to obtain a nonwoven fabric; and
iv) coating by vapor deposition the nonwoven fabric obtained in step (iii) with a second binder to obtain a continuous composite surface.

In an additional aspect, the present invention is directed to a method for the preparation of a burner surface comprising the steps of:
i) providing the continuous composite surface as defined above; and
ii) perforating the continuous composite surface to obtain a burner surface.

In a further aspect, the present invention is directed to the use of a burner surface as defined above in boilers, water heaters and/or cooking burners.

In an even further aspect, the present invention is directed to the use of a burner assembly as defined above in boilers, water heaters and/or cooking burners.

### FIGURES

Figure 1: Scheme of a frame able for suctioning a dispersion comprising fibers to obtain a nonwoven layer.
Figure 2: Optical micrograph of a burner surface.
Figure 3: Photograph showing differently shaped burner surfaces comprising ceramic fibers of silica (SiO₂) (white one) and comprising SiC fibers (black ones).
Figure 4: Photograph showing a burner assembly comprising a burner surface performing combustion.
Figure 5: Scanning electron microscopy micrographs of different surfaces.
Figure 6: Burner assemblies performing combustion reactions at different conditions.

### DETAILED DESCRIPTION OF THE INVENTION

Unless defined otherwise, all technical and scientific terms used herein have the same meaning as commonly understood to one of ordinary skill in the art to which this disclosure belongs. As used herein, the singular forms "a" "an" and "the" include plural reference unless the context clearly dictates otherwise.

### Continuous composite surface

As defined above, in a first aspect, the present invention refers to a continuous composite surface, obtainable by the method comprising the steps of
i) providing a dispersion comprising
   a. ceramic fibers;
   b. at least one polymeric first binder; and
   c. a solvent;
ii) suctioning said dispersion through a frame to obtain a nonwoven layer comprising said ceramic fibers and said at least one polymeric first binder, wherein said frame has no protrusions;
iii) heating said nonwoven layer obtained in step (ii) at a temperature high enough to decompose said at least one polymeric first binder from said nonwoven layer to obtain a nonwoven fabric; and
iv) coating by vapor deposition the nonwoven fabric obtained in step (iii) with a second binder to obtain a continuous composite surface.

In the context of the present invention, the expression "composite surface" refers to a surface made from at least two constituent materials with significantly different physical or chemical properties such as ceramic fibers and a binder, that when combined produce a material with different characteristics from its individual components. In the present invention, the composite material comprises ceramic fibers and a binder. In a particular embodiment, the ceramic fibers are a filler. Additionally, in the context of the present invention the term "continuous" in the expression "continuous composite surface" refers to a surface that does not comprise apertures, perforations, holes, openings, apertures and/or slits such as those made by any of laser, pin, die, punch, hydro jet perforation techniques and combination thereof. Said continuous composite surface may be porous.

In the context of the present invention, the expression "ceramic fibers" refers to fibers of ceramic materials such as ceramic oxides, non-oxide ceramics or combinations thereof. Non-limiting examples of "ceramic oxides" are alumina, alumina-silica, alumina-boria-silica, aluminum borosilicate, alumina-mullite, silica, zirconia, zirconia-silica, titania, titania-silica, rare earth oxides or a combination thereof. Non-limiting examples of "non-oxide ceramics" are silicon carbide, silicon carbonitride, silicon oxycarbide, silicon titanium oxycarbide, silicon nitride, aluminum nitride, silicon titanium, silicon alumina nitride or a combination thereof.

In the present invention the continuous composite surface is obtainable by the method described above that comprises a step (i) of providing a dispersion comprising
a. ceramic fibers;
b. at least one polymeric first binder; and
c. a solvent.

In a particular embodiment, the ceramic fibers of step (i) are selected from commercially available ceramic fibers. Non-limiting examples of commercially available ceramic fibers include glass fibers, quartz fibers, aluminum borosilicate fibers, silica fibers, non-oxide fibers (for example, silicon carbide, silicon carbonitride, silicon oxycarbide, silicon titanium oxycarbide), as well as those ceramic oxide fibers marketed by 3M Company (Saint Paul, MN) under the trade designation "NEXTEL" (for example, "NEXTEL 312", "NEXTEL 440", "NEXTEL 550", "NEXTEL 610", "NEXTEL 650", and "NEXTEL 720"), by BelChem Fiber Materials GmbH (Freiberg, Germany) under the trade designation "BELCOTEX", by COI Ceramics Company under the trade designation of "NICALON FIBER" (for example, "NICALON", "HI-NICALON" and "Hi-Nicalon Type S"), by UBE Industries under the trade designation of "Tyranno fiber" or by Hitco Carbon Composites, Inc. (Gardena, CA) under the trade designation "REFRASIL".

In a more particular embodiment, the ceramic fibers of step (i) are selected from silicon carbide (SiC) fibers, silicon carbonitride (SiCN) fibers, alumina (Al₂O₃) fibers, alumina-mullite fibers, aluminum borosilicate fibers and silica (SiO₂) fibers; preferably selected from silicon carbide (SiC) fibers, silicon carbonitride (SiCN) fibers, aluminium borosilicate fibers and silica fibers (SiO2); more preferably silicon carbide (SiC) fibers.

In a particular embodiment, the ceramic fibers of step (i) are chopped fibers.

In a particular embodiment, the ceramic fibers of step (i) are in the form of individual fibers, bundles, yarns or a fabric; preferably in the form of individual fibers.

In a particular embodiment, the ceramic fibers of step (i) are dispersed.

In the context of the present invention, the term "dispersed" means the opposite of aggregated or agglomerated.

Non-limiting examples of individual fibers suitable for the present invention include straight, crimped or roving fibers. Non-limiting examples of fabric suitable for the present invention include woven, knitted or nonwoven fabric.

In a particular embodiment, the ceramic fibers of step (i) have diameters between 1 and 50 microns; preferably between 5 and 40 microns; more preferably between 10 and 30 microns; even more preferably between 6 and 26 microns.

In a particular embodiment, the ceramic fibers of step (i) have lengths between 0.1 and 50 mm; preferably between 0.5 and 30 mm; more preferably between 1 and 25 mm.

In the context of the present invention, the expressions "fiber thickness" or "fiber diameter" are synonyms. In the context of the present invention the expression "fiber diameter" or "fiber diameters" relates to the shorter dimension of a fiber. In the context of the present invention the expression "fiber length" or "fiber lengths" relates to the longer dimension of a fiber.

In a particular embodiment, the ceramic fibers of step (i) have aspect ratios of between 200 and 1000, preferably between 300 and 800, more preferably between 400 and 600.

In the context of the present invention, the expression "aspect ratio" relates to the ratio of the fiber sizes in different dimensions. As a non-limiting example the aspect ratio of a fiber is the ratio of its longer side or its length to its shorter side or its diameter or thickness, i.e. if a fiber has a length of 40000 microns and a diameter of 20 microns, its aspect ratio is 2000.

In a particular embodiment, the ceramic fibers of step (i) are uncoated.

In a particular embodiment, the ceramic fibers of step (i) are coated.

In a more particular embodiment, the ceramic fibers of step (i) are coated with an organic or an inorganic film.

In a particular embodiment, the ceramic fibers of step (i) are in a concentration between 0.01 and 10 g/dm³; preferably between 0.1 and 5 g/dm³, more preferably between 0.2 and 2 g/dm³, even more preferably between 0.1 and 1 g/dm³.

In a particular embodiment, the dispersion of step (i) comprises ceramic fibers as a first filler, and a second filler, preferably a second ceramic filler; preferably wherein the first filler is in greater amount that the second filler; more preferably wherein the first filler and the second filler are in at least a 2:1 ratio. In a more particular embodiment said second filler is selected from ceramic fibers or ceramic particles; preferably ceramic particles.

In another particular embodiment, the ceramic fibers or ceramic particles of the present invention are hollow.

In a particular embodiment, the ceramic fibers of step (i) are the major filler; preferably the only filler.

In a particular embodiment, the dispersion of step (i) comprises ceramic fibers and the at least one polymeric first binder in a ratio of at least 2:1; preferably of at least 3:1; more preferably of at least 5:1, even more preferably of at least 10: 1.

In a more particular embodiment, the material of the second ceramic filler of step (i) is selected from silicon carbide (SiC) , silicon carbonitride (SiCN), alumina (Al₂O₃), alumina-mullite, aluminum borosilicate and silica (SiO2); preferably selected from silicon carbide (SiC), silicon carbonitride (SiCN), aluminium borosilicate and silica (SiO2); more preferably silicon carbide (SiC).

The authors of the present invention believe that using ceramic fibers improves the durability and resistance to high temperatures of the continuous composite surface of the present invention and reduces its thermal mass over using other materials. Additionally, it is believed that ceramic fibers do not suffer significant oxidation at high temperatures and, therefore, do not significantly change its volume.

In the context of the present invention, the term "binder" refers to a substance that helps the ceramic fibers to stick together by adhesion or cohesion. In the context of the present invention, the expression "first binder" refers to a binder in the dispersion of step (i) and the expression "second binder" refers to a binder added in step (iv).

In a particular embodiment, the at least one polymeric first binder of step (i) is a carbohydrate; preferably a monomeric or polymeric carbohydrate; more preferably cellulose or dextrin; even more preferably cellulose.

In a particular embodiment, the at least one polymeric first binder of step (i) is a polymer. Said polymer is preferably selected from a polymeric carbohydrate, thermoplastic polymer, polyacrylate, polyurethane, epoxy resins, phenol resins, thermo curing resins, light sensitive resins, polyester resins and/or a combination thereof.

In another particular embodiment, the at least one polymeric first binder of step (i) is a polymer selected from a polymeric carbohydrate, thermoplastic polymer, polyacrylate, polyurethane, phenolic resins, thermo curing resins, light sensitive resins, polyester resins and/or a combination thereof; preferably selected from a monomeric carbohydrate, polymeric carbohydrate and thermoplastic polymer.

In a particular embodiment, the at least one polymeric first binder of step (i) is a thermoplastic polymer selected from poly(methyl methacrylate) (PMMA), polycarbonate (PC), polystyrene (PS), polypropylene (PP), polyethylene (PE), polyglycolide (PGA), poly(propylenefumarate) (PPF), polycyanoacrylate (PCA), polycaprolactone (PCL), poly(glycerol sebacate) (PGS), poly(glycerol sebacate acrylate) (PGSA), polyvinylidenefuoride (PVDF), polyvinylidene chloride (PVDC), polyethylene terephthalate (PET), polybutylene therephtalate (PBT), polyphenylene oxide (PPO), polyimide (PI), polyvinyl chloride (PVC), cellulose acetate (CA), cyclic olefin copolymer (COC), ethylene vinyl acetate (EVA), ethylene vinyl alcohol (EVOH), polytetrafluoroethylene (PTFE), fluorinated ethylene propylene (FEP), perfluoroalkoxy (PEA), ethylene tetrafluoroethylene (ETFE), polyethersulfone (PES), chlorinated poly ethylene (CPE), polylactic acid (PLA), poly 3-hydroxybutyrate (P3HB), polybutylene adipate (PBA), polyethylene adipate (PEA), polybutylene succinate (PBS), polyphenylene sulfide (PPS), polysulfone (PSU), polytrimethylene terephthalate (PTT), polyurethane (PU), polyvinyl acetate (PVA), polyvinylidene chloride (PVDC), styrene acrylonitrile (SAN), polyetherketones (PEEK), polyvinylalcohol (PVA), polyhydroxyethylmethacrylate polyvinylalcohol (PVA), polyhydroxyethylmethacrylate (PHEMA), poly(N-isopropylacrylamide) (PNIPAAm) and mixtures thereof.

In a particular embodiment, the at least one polymeric first binder of step (i) is a vinyl polymer selected from polyvinyl chloride (PVC), poly(vinyl acetate) and polyvinyl alcohol (PVA); preferably polyvinyl alcohol (PVA).

In a particular embodiment, the at least one polymeric first binder of step (i) is selected from polyvinyl alcohol (PVA), polyimide (PI), dextrin and cellulose; preferably selected from polyvinyl alcohol (PVA), polyimide (PI) and dextrin; more preferably polyvinyl alcohol (PVA).

In a particular embodiment, the at least one polymeric first binder of step (i) is not in the form of beads.

In a particular embodiment, the at least one polymeric first binder of step (i) is a polymer fiber.

In a particular embodiment, the at least one polymeric first binder of step (i) is in a concentration between 0.001 g/dm³ and 2 g/dm³, preferably between 0.005 and 1.5 g/dm³.

The authors of the present invention have observed that a method comprising a first step of providing a dispersion comprising ceramic fibers, at least one polymeric first binder, and a solvent leads to a uniform continuous composite surface with a reduced amount of defects.

In the context of the present invention the expression "dispersion" refers to a mixture or a slurry of at least one solid element, such as ceramic fibers, dispersed in a solvent.

Non-limiting examples of solvents suitable for the present invention are methanol, 2-propanol, chloroform, toluene, anisole, cyclohexane, dimethyl formamide, methanol, dichloromethane, trichloroethane, water, acetone, ethyl acetate, N-methyl-2-pyrrolidone and mixtures thereof.

In a particular embodiment, the dispersion of step (i) comprises a solvent selected from methanol, ethanol and water; preferably water.

In a particular embodiment, the dispersion of step (i) has a viscosity between 1 Cps and 10000 Cps, preferably of between 10 and 5000 Cps, more preferably of between 50 and 2000 Cps, even more preferably between 50 and 1000 Cps.

In a particular embodiment, the dispersion of step (i) is stable.

The dispersion provided in step (i) may be prepared by dispersing the ceramic fibers and the at least one polymeric first binder and, optionally, other additives, in a suitable solvent by applying energy via mechanical methods known in the art for example by means of dispersers, agitators or by ultrasonic baths and or probes. Other alternatives known in the art to prepare stable dispersions that are suitable for the invention include the addition of surface tension control additives (surfactants) to the dispersion, or modification of the ceramic fibers surface by bound or unbound ligand molecules. The dispersion quality may be assessed by the stability of the dispersions during a certain time without flocculation or precipitation. In particular, the ceramic fibers should not aggregate and flocculate in the time frame of the fabrication process, i.e.: from several minutes to hours. Turbidimetry or nephelometry and/or dynamic light scattering can be used for monitoring the stability of the dispersions.

The authors of the present invention have observed that the use of at least one polymeric first binder in the dispersion improves the stability of said dispersion, i.e. reduces the precipitation and/or flocculation of the ceramic fibers.

In a particular embodiment, the dispersion of step (i) further comprises at least one additive; preferably at least one colloidal additive; more preferably at least one colloidal additive selected from colloidal silica, colloidal alumina and combinations thereof.

In some embodiments, the dispersion further comprises one or more additive admixtures. In some embodiments, the one or more additive admixtures are chosen from thickeners, surfactants, and/or ceramic precursors.

In a particular embodiment, the dispersion of step (i) further comprises at least one thickener. In the context of the present invention, the term "thickener" refers to a compound that increases the density of the dispersion of step (i). Suitable thickeners according to the present invention include colloidal silica, colloidal alumina, sodium alginate (E-401), potassium alginate (E-402), ammonium alginate (E-403), calcium alginate (E-404) and mixtures thereof.

In a particular embodiment, the dispersion of step (i) further comprises at least one surfactant. Suitable surfactants include anionic surfactants, cationic surfactants, nonionic surfactants, amphoteric surfactants or combinations thereof. Exemplary of the anionic surfactant are carboxylic acid, sulfuric acid ester, sulfonic acid, and phosphoric acid ester type surfactants. Exemplary of the cationic surfactant are amine salt, primary amine salt, secondary amine salt, tertiary amine salt, and Quaternary amine salt type surfactants. Exemplary of the nonionic surfactant are ester, ester-ether, and ether type surfactants. Exemplary of the amphoteric surfactant are amino acid and sulfo-betaine type surfactants.

In a particular embodiment, the dispersion of step (i) further comprises metal fibers.

In a more particular embodiment, the dispersion of step (i) further comprises metal fibers selected from iron-based and nickel-based alloys fibers.

In a more particular embodiment, the dispersion of steps (i) and (ii) is at room temperature.

In the context of the present invention, the expression "room temperature" refers to a temperature between 15 degrees (°C) and 25 °C.

In a more particular embodiment, the dispersion of steps (i) and (ii) is at a temperature between 50 and 100 °C.

Without being bound to any theory in particular, the authors of the present invention observe that the use of additives improves the dispersion of the fibers in the nonwoven layer. Without being bound to any theory in particular, the authors of the present invention observe that the use of a first binder improves the stability of the nonwoven layer making it a self-supporting layer.

In the present invention, the continuous composite surface is obtainable by the method described above that comprises a step (ii) of suctioning said dispersion through a frame to obtain a nonwoven layer comprising said ceramic fibers and said at least one polymeric first binder, wherein said frame has no protrusions.

In the context of the present invention, the term "frame" refers to a pulp molding mold, particularly to a male half of a pulp molding mold related to the "pulp molding technology" known in the art. A pulp molding mold suitable for the present invention comprises two halves: a male half (convex) and a female half (concave). One of the halves of said suitable pulp molding mold comprises perforations and is suitable for suctioning a dispersion comprising ceramic fibers, at least one polymeric first binder and a solvent and to create a nonwoven layer comprising the ceramic fibers and the at least one polymeric first binder on the external surface of said half pulp molding mold; preferably the male half. Said pulp molding mold can be used with or without a filter. Said filter is particularly a metallic mesh filter. In the present invention, neither the male half nor the female half have protrusions or pins in their surface. Additionally, the pulp molding mold used can be adapted to create a flat or 3D shaped nonwoven layers with different shapes.

In a particular embodiment, the frame of step (ii) has no protrusions; preferably the frame of step (ii) has no protrusions on its external surface.

In a particular embodiment, the frame of step (ii) comprises perforations. Said perforations have preferably diameters over 5 microns.

In a particular embodiment, the frame of step (ii) is a pulp molding mold; preferably a half of a pulp molding mold; more preferably a male half of a pulp molding mold.

In a particular embodiment, the frame of step (ii) is a half of a pulp molding mold; preferably a male half of a pulp molding mold; wherein said half of a pulp molding mold does not comprise protrusions; preferably on its external surface.

In a particular embodiment, the suctioning of the dispersion through a frame of step (ii) is performed during a period of time between 1 sec and 300 sec, preferably between 5 and 120 sec, more preferably between 5 and 30 sec; even more preferably between 2 and 30 sec.

In a particular embodiment, the suctioning of the dispersion through a frame of step (ii) is performed at a difference of pressure between 1 mbar and 10 bar, preferably between 2 mbar and 1 bar, more preferably between 5 mbar and 200 mbar.

In the context of the present invention the expression "nonwoven layer" refers to a layer comprising physical entangling ceramic fibers and a first binder that helps said ceramic fibers to stick together by adhesion or cohesion.

In a particular embodiment, the nonwoven layer of step (ii) has a thickness between 0.1 and 50 mm; preferably between 0.5 and 40 mm; more preferably between 1 and 10 mm.

In a particular embodiment, the nonwoven layer of step (ii) comprises between 1 and 70 wt% of the at least one first polymeric binder; preferably between 10 and 60 wt%; more preferably around 50 wt%.

In a particular embodiment, the at least one first polymeric binder is a polymeric carbohydrate, preferably cellulose, and the nonwoven layer of step (ii) comprises between 1 and 70 wt% of said at least one first polymeric binder; preferably between 10 and 60 wt%; more preferably between 20 and 55 wt%; even more preferably around 50 wt%.

In a particular embodiment, the at least one first polymeric binder is a polymeric carbohydrate, preferably cellulose;
the nonwoven layer of step (ii) has a 3D shape and comprises between 1 and 70 wt% of said at least one first polymeric binder; preferably between 10 and 60 wt%; more preferably between 20 and 55 wt%; even more preferably around 50 wt%.

It is believed that using a polymeric carbohydrate as a first polymeric binder improves the dispersion of the fibers in the nonwoven layer and its homogeneity and thus, improves the durability and resistance to high temperatures of the continuous composite surface of the present invention. In addition, it reduces or completely eliminates the damage caused by demolding the nonwoven layer.

In a particular embodiment, the nonwoven layer of step (ii) comprises an at least one first polymeric binder weight percentage of between 1 and 20 wt%, preferably between 2 and 15 wt%; more preferably between 2 and 8 wt%; even more preferably between 3 and 6 wt%.

In a particular embodiment, the at least one first polymeric binder is a thermoplastic polymer or a monomeric carbohydrate, preferably poly(vinyl alcohol)(PVA), polyimide (PI) or dextrin, and
the nonwoven layer of step (ii) comprises between 1 and 20 wt% of said at least one first polymeric binder; preferably between 2 and 15 wt%; more preferably between 2 and 8 wt%; even more preferably between 3 and 6 wt%.

In a particular embodiment, the at least one first polymeric binder is a thermoplastic polymer or a monomeric carbohydrate, preferably poly(vinyl alcohol)(PVA), polyimide (PI) or dextrin,
and the nonwoven layer of step (ii) is flat
and comprises between 1 and 20 wt% of said at least one first polymeric binder; preferably between 2 and 15 wt%; more preferably between 2 and 8 wt%; even more preferably between 3 and 6 wt%.

Without being bound to any theory in particular, the authors of the present invention believe that suctioning the dispersion of step (i) through a frame improves the uniformity in the deposition of the fibers in the nonwoven layer of the present invention. Additionally it is believed that using a frame that does not comprises protrusions improves the dispersion of the fibers in the nonwoven layer and its homogeneity and thus, improves the durability and resistance to high temperatures of the continuous composite surface of the present invention and the quality of said surface. In addition, the authors of the present invention have observed that when the at least one first polymeric binder is a thermoplastic polymer or a monomeric carbohydrate, the quality of the nonwoven layer of step (ii) is improved, in particular if said nonwoven layer is flat. Moreover, the authors of the present invention have observed that when the at least one first polymeric binder is a polymeric carbohydrate, the quality of the nonwoven layer of step (ii) is improved, in particular if said nonwoven layer has a 3D shape.

In a particular embodiment, the nonwoven layer of step (ii) comprises more weight percentage of ceramic fibers than of at least one polymeric first binder.

In a particular embodiment, the nonwoven layer of step (ii) comprises ceramic fibers and the at least one polymeric first binder in a ratio of at least 2:1; preferably of at least 3:1; more preferably of between 2:1 and 4:1.

In a particular embodiment, the at least one polymeric first binder of the present invention is one polymeric first binder.

In a particular embodiment, a continuous composite surface, obtainable by the method comprising the steps of
i) providing a dispersion comprising
   a. ceramic fibers;
   b. at least one polymeric first binder; and
   c. a solvent;
ii) suctioning said dispersion through a frame to obtain a nonwoven layer comprising said ceramic fibers and said at least one polymeric first binder, wherein said frame has no protrusions; and stabilizing, drying and demolding said nonwoven layer obtained by suctioning;
iii) heating said nonwoven layer obtained in step (ii) at a temperature high enough to decompose said at least one polymeric first binder from said nonwoven layer to obtain a nonwoven fabric; and
iv) coating by vapor deposition the nonwoven fabric obtained in step (iii) with a second binder to obtain a continuous composite surface.

In a particular embodiment, the stabilizing and drying of the nonwoven layer of step (ii) is performed under heating at between 40 and 200 °C; preferably between 50 and 100 °C.

In a particular embodiment, the demolding of the nonwoven layer of step (ii) is performed by applying pressurized air.

Additionally, the authors believe that using a frame with no protrusions in step (ii) reduces or completely eliminates the damage caused by demolding the nonwoven layer. In addition, continuous frames with no protrusions are cheaper and more robust that those with pins or protrusions thus reducing the price of the continuous composite surface of the present invention.

In the present invention, the continuous composite surface is obtainable by the method described above that comprises a step (iii) of heating said nonwoven layer obtained in step (ii) at a temperature high enough to decompose said at least one polymeric first binder from said nonwoven layer to obtain a nonwoven fabric.

In the context of the present invention the expression "to decompose" in relation to said at least one polymeric first binder from said nonwoven layer refers to a thermal decomposition. Non-limiting examples of said thermal decomposition are: burning said at least one polymeric first binder from said nonwoven layer or pyrolyzing said at least one polymeric first binder from said nonwoven layer; preferably pyrolyzing.

In a particular embodiment, the heating of step (iii) is performed by burning said at least one polymeric first binder.

In a particular embodiment, the heating of step (iii) is performed by pyrolyzing said at least one first polymeric binder; preferably by pyrolyzing said at least one polymeric first binder at inert atmosphere; more preferably under N₂ gas.

In a more particular embodiment, the heating performed by pyrolyzing said at least one polymeric first binder of step (iii) leaves a carbonaceous residue on said nonwoven fabric; preferably a pyrolytic carbon residue; more preferably between 1 and 60 wt% pyrolytic carbon residue of the initial at least one polymeric first binder; preferably between 2 and 20 wt%.

In a particular embodiment when the at least polymeric first binder is poly(vinyl alcohol) (PVA) or dextrin, the carbonaceous residue left is below 20 wt% of the initial at least one polymeric first binder; preferably below 10 wt%; more preferably below 5 wt%.

In a particular embodiment when the at least polymeric first binder is polyimide, the carbonaceous residue left is below 70 wt% of the initial at least one polymeric first binder; preferably between 20 and 70 wt%; more preferably between 30 and 60 wt%.

In the context of the present invention the term "pyrolyzing" refers to the thermal decomposition of organic materials in an inert atmosphere by pyrolysis that usually leaves pyrolytic carbon as residue.

Without being bound to any theory in particular, the authors of the present invention have observed that by pyrolyzing the at least one polymeric first binder the properties of the nonwoven fabric of step (iii) are improved. Moreover, the authors have observed that by selecting the at least one polymeric first binder the porosity of the nonwoven fabric may be controlled.

In a particular embodiment, the heating of step (iii) is performed at a temperature between 100 and 1200 °C, preferably between 150 and 1100°C, more preferably between 200 and 1090°C.

In a particular embodiment, the heating of step (iii) is performed during between 1 and 100 hours, preferably during between 5 and 50 hours, more preferably during between 10 and 20 hours.

In a particular embodiment, the heating of step (iii) is performed at a vacuum level below 100 mbar, preferably between 2 and 50 mbar, more preferably between 5 and 30 mbar.

In a particular embodiment, the heating of step (iii) is performed in a furnace; preferably in a vacuum furnace; more preferably in a hot wall vacuum furnace; even more preferably in a chemical vapor deposition furnace.

In a particular embodiment, the heating of step (iii) is performed at a temperature between 150°C and 1100 °C, a pressure below 100 mbar and during between 5 and 50 hours in a hot wall vacuum furnace.

In a particular embodiment, the heating of step (iii) is performed while said nonwoven layer is placed on the female half of the suitable pulp molding mold.

Without being bound to any theory in particular, the authors of the present invention have observed that using temperatures between 100°C and 1200°C in the heating of step (iii) reduces defects in the ceramic fibers comprised in the continuous composite surface of the present invention. Additionally, the authors have observed that placing the nonwoven layer on the female half of the pulp molding mold during the heating step (iii), leads to a high quality surface of the continuous composite surface of the present invention.

In the context of the present invention the expression, "nonwoven fabric" refers to a layer comprising physical entangling ceramic fibers wherein the nonwoven fabric does not have a first binder. Said layer may be porous; wherein the pores are the ones left by the ceramic fibers interstices. The carbonaceous residue left by the at least one polymeric first binder may join the ceramic fibers and may affect the porosity of the nonwoven fabric; in particular it may affect the shape and/or diameters of the pores.

In a particular embodiment, the nonwoven fabric of steps (iii) and (iv) and the continuous composite surface of step (iv) does not comprises the at least one polymeric first binder.

In a particular embodiment, the nonwoven fabric of any of steps (iii) and (iv) or the continuous composite surface of step (iv) comprises a carbonaceous residue; preferably pyrolytic carbon; preferably between 0.1 and 20 wt% of pyrolytic carbon; more preferably between 0.5 and 15 wt%; even more preferably between 1 and 10 wt%; even much more preferably between 1 and 5 wt%.

In a more particular embodiment, the at least one polymeric first binder is PVA; and the nonwoven fabric of any of steps (iii) and (iv) or the continuous composite surface of step (iv) comprises between 0.1 and 10 wt% of pyrolytic carbon; preferably between 0.1 and 5 wt% of pyrolytic carbon.

In a more particular embodiment, the at least one polymeric first binder is dextrin; and the nonwoven fabric of any of steps (iii) and (iv) or the continuous composite surface of step (iv) comprises between 0.1 and 10 wt% of pyrolytic carbon; preferably between 0.1 and 5 wt% of pyrolytic carbon.

In a more particular embodiment, the at least one polymeric first binder is polyimide; and the nonwoven fabric of any of steps (iii) and (iv) or the continuous composite surface of step (iv) comprises between 0.1 and 20 wt% of pyrolytic carbon; preferably between 5 and 20 wt% of pyrolytic carbon.

In a more particular embodiment, the at least one polymeric first binder is cellulose; and the nonwoven fabric of any of steps (iii) and (iv) or the continuous composite surface of step (iv) comprises between 1 and 60 wt% of pyrolytic carbon; preferably between 10 and 40 wt% of pyrolytic carbon; more preferably around 30 wt% of pyrolytic carbon.

In a particular embodiment, the nonwoven fabric of any of steps (iii) and (iv) has a thickness between 0.1 and 50 mm; preferably between 1 and 40 mm; more preferably between 2 and 10 mm.

In a particular embodiment, the nonwoven fabric of any of steps (iii) and (iv) or the continuous composite surface of step (iv) is porous; preferably comprising pores wherein said pores are the void fraction created by the interstices among the ceramic fibers.

In a particular embodiment, the nonwoven fabric of any of steps (iii) and (iv) or the continuous composite surface of step (iv) has porosity values between 70 and 99 %, preferably between 80 and 98 %; more preferably between 90 and 95%.

In the context of the present invention the expression "porosity" in relation with any one of the nonwoven layer, the nonwoven fabric, the continuous composite surface and the burner surface refers to a void fraction created by the pores or the interstices among the ceramic fibers and is a fraction of the volume of voids over the total volume expressed as a percentage between 0% and 100%. In addition, the porosity of the nonwoven layer, the nonwoven fabric, the continuous composite surface and/or the burner surface may be calculated by a liquid displacement method, like a water displacement method, as known in the art. Therefore, in the context of the present invention, the term "pore" in singular or plural refers to the interstices among the ceramic fibers in any one of the nonwoven layer, the nonwoven fabric, the continuous composite surface and the burner surface. Said pores are generally created during the suctioning step. Preferably, said pores have averaged diameters between 1 and 100 microns; preferably between 5 and 50 microns; more preferably between 10 and 40 microns.

In a particular embodiment, the continuous composite surface of the present invention is obtainable by the method comprising the steps of
i) providing a dispersion comprising
   a. ceramic fibers;
   b. at least one polymeric first binder; and
   c. a solvent;
ii) suctioning said dispersion through a frame to obtain a nonwoven layer comprising said ceramic fibers and said at least one polymeric first binder, wherein said frame has no protrusions; and
   stabilizing, drying and demolding said nonwoven layer obtained by suctioning;
iii) heating said nonwoven layer obtained in step (ii) at a temperature high enough to decompose said at least one polymeric first binder from said nonwoven layer to obtain a nonwoven fabric; and
   coating said nonwoven fabric with a carbon layer by vapor deposition to obtain a nonwoven fabric coated with a carbon layer; and
iv) coating by vapor deposition the nonwoven fabric coated with a carbon layer obtained in step (iii) with a second binder to obtain a continuous composite surface.

In a particular embodiment, the continuous composite surface of the present invention is obtainable by the method comprising the steps of
i) providing a dispersion comprising
   a. ceramic fibers;
   b. at least one polymeric first binder; and
   c. a solvent;
ii) suctioning said dispersion through a frame to obtain a nonwoven layer comprising said ceramic fibers and said at least one polymeric first binder, wherein said frame has no protrusions;
iii) heating said nonwoven layer obtained in step (ii) at a temperature high enough to decompose said at least one polymeric first binder from said nonwoven layer to obtain a nonwoven fabric; and
   coating said nonwoven fabric with a carbon layer by vapor deposition to obtain a nonwoven fabric coated with a carbon layer; and
iv) coating by vapor deposition the nonwoven fabric coated with a carbon layer obtained in step (iii) with a second ceramic coating to obtain a continuous composite surface.

In a particular embodiment, the carbon layer of step (iii) is a pyrolytic carbon layer.

In the context of the present invention the term "vapor deposition" refers to conventional gas phase deposition techniques such as chemical vapor deposition or a physical vapor deposition techniques known in the art that are able to coat, deposit and/or impregnate the surface of the nonwoven fabric with a layer of carbon or with a layer of the second binder. Said second binder is able to create bridges among the ceramic fibers.

In a particular embodiment, the coating of step (iii) is performed at a temperature below 1200°C, preferably between 800 and 1100 °C, more preferably between 900 and 1090°C.

In a particular embodiment, the coating of step (iii) is performed during between 1 and 100 hours, preferably during between 5 and 50 hours, more preferably during between 1 and 5 hours.

In a particular embodiment, the coating of step (iii) is performed at a pressure below 100 mbar, preferably between 2 mbar and 50 mbar, more preferably between 5 mbar and 30 mbar.

In a particular embodiment, the coating of step (iii) is performed in a furnace; preferably in a vacuum furnace; more preferably in a hot wall vacuum furnace; even more preferably in a chemical vapor deposition furnace.

In a particular embodiment, the coating of step (iii) is performed at a temperature below 1200°C, at a pressure below 100 mbar and during between 1 and 5 hours in a hot wall vacuum furnace.

In a particular embodiment, the coating of step (iii) uses methane as precursor gas.

In a particular embodiment, the vapor deposition of step (iii) is a chemical vapor deposition.

In a particular embodiment, the nonwoven fabric of step (iii) is a nonwoven fabric coated with a carbon layer; preferably a nonwoven fabric coated with a pyrolytic carbon layer.

In a more particular embodiment, the carbon layer of step (iii) has a thickness of between 0.01 and 30 microns, preferably of between 0.01 and 10 microns, more preferably of between 0.01 and 1 microns, even more preferably between 0.01 and 0.1 microns.

Without being bound to any theory in particular, the authors of the present invention have observed that coating the nonwoven fabric with a carbon layer, improves the homogeneity of the second binder deposition and therefore, improves the quality of the continuous composite surface.

In the present invention, the continuous composite surface is obtainable by the method described above that comprises a step (iv) of coating by vapor deposition the nonwoven fabric obtained in step (iii) with a second binder to obtain a continuous composite .

In a particular embodiment, the vapor deposition of step (iv) is performed at a temperature below 1200°C, preferably between 800 and 1100 °C, more preferably between 900 and 1090°C.

In a particular embodiment, the vapor deposition of step (iv) is performed during between 1 and 100 hours, preferably during between 5 and 50 hours, more preferably during between 5 and 15 hours.

In a particular embodiment, the vapor deposition of step (iv) is performed at a pressure below 100 mbar, preferably between 2 mbar and 50 mbar, more preferably between 5 mbar and 30 mbar.

In a particular embodiment, the vapor deposition of step (iv) is performed in a furnace; preferably in a vacuum furnace; more preferably in a hot wall vacuum furnace; even more preferably in a chemical vapor deposition furnace.

In a particular embodiment, the vapor deposition of step (iv) is performed at a temperature below 1200°C, at a pressure below 100 mbar and during between 1 and 48 hours in a hot wall vacuum furnace.

In a particular embodiment, the vapor deposition of step (iv) is a chemical vapor deposition.

In a particular embodiment, step (iii) and step (iv) are performed sequentially in the same furnace; preferably in a tube furnace; more preferably in a gas tube furnace; even more preferably in a chemical vapor deposition furnace.

In a particular embodiment, the vapor deposition of step (iv) creates a layer of the second binder on the surface of the nonwoven fabric of step (iii). Preferably said layer of the second binder has a thickness of between 0.01 and 30 microns, preferably of between 0.01 and 20 microns, more preferably of between 0.01 and 10 microns; even more preferably between 0.01 and 1 micron.

In a particular embodiment, the second binder of step (iv) is a ceramic binder.

Preferably said second binder of step (iv) is a ceramic binder selected from ceramic oxides, non-oxide ceramics and combinations thereof; preferably selected from alumina, alumina-silica, alumina-boria-silica, silica, zirconia, zirconia-silica, titania, titania-silica, rare earth oxides, silicon carbide, silicon carbonitride, silicon nitride, aluminum nitride, silicon titanium, silicon alumina nitride and combinations thereof.

In a more particular embodiment, the second binder of step (iv) is silicon carbide.

In a more particular embodiment, the vapor deposition of step (iv) is performed using a ratio of trimethylsilane gas and N₂ of between 1:20 and 1:5 parts; preferably of between 1:15 and 1:8 parts.

In a more particular embodiment, the vapor deposition of step (iv) is performed at a temperature below 1200°C, at a pressure below 100 mbar and during between 2 and 15 hours in a tube furnace using trimethylsilane gas; and wherein the second binder is silicon carbide.

Without being bound to any theory in particular, the authors of the present invention believe that the use of a second binder increases the strength, durability and resistance to high temperatures of the continuous composite surface of the present invention. Also, it has been observed that coating by vapor deposition leads to a more resistant and homogeneous continuous composite than using other coating techniques known in the art such as dip coating.

In a more particular embodiment, the continuous composite surface obtainable by the method described above, has a thickness between 0.1 and 50 mm; preferably between 0.5 and 40 mm; more preferably between 1 and 20 mm; even more preferably between 2 and 10 mm.

In a more particular embodiment, the continuous composite surface obtainable by the method described above, is planar or tridimensional; preferably tridimensional.

In a more particular embodiment, the continuous composite surface obtainable by the method described above, has a planar shape.

In a more particular embodiment, the continuous composite surface obtainable by the method described above, has a tridimensional shape; preferably a tridimensional shape selected from a curved shape, a cylindrical shape, a conic shape, a semi-cylindrical shape, a semi-spherical shape, and a bell-shape.

In a more particular embodiment, the continuous composite surface obtainable by the method described above, has a homogeneous ceramic fiber distribution.

In a more particular embodiment, the continuous composite surface comprises ceramic fibers as a first filler, and a second filler; preferably wherein said ceramic fibers are in greater amount than the second filler; more preferably wherein said ceramic fibers are in greater weight percentage than the second filler.

In a more particular embodiment, the continuous composite surface comprises ceramic fibers as the major filler; preferably as the only filler.

In a more particular embodiment, the continuous composite surface obtainable by the method described above, has a ceramic fiber density of between 50 and 400 g/m², preferably of between 50 and 300 g/m², more preferably of between 100 and 200 g/m².

In a more particular embodiment, the continuous composite surface obtainable by the method described above, comprises at least 50 wt% of ceramic fibers; preferably at least 95 wt% of ceramic fibers of said continuous composite surface, more preferably at least 96 wt%; even more preferably at least 98 wt%.

Without being bound to any theory in particular, the authors of the present invention believe that the homogenous ceramic fiber distribution in the continuous composite surface increases the strength, durability and resistance to high temperatures of the continuous composite surface of the present invention. It has been observed that a second binder helps ceramic fibers to stick together by adhesion and/or cohesion.

In a particular embodiment, the continuous composite surface of the present invention comprises ceramic fibers and a second binder; particularly comprises physical entangling ceramic fibers and a silicon carbide binder.

In a particular embodiment, the continuous composite surface of the present invention comprises a nonwoven fabric comprising ceramic fibers coated by a second binder layer.

In a particular embodiment, the continuous composite surface of the present invention comprises a nonwoven fabric comprising ceramic fibers coated by a pyrolytic carbon layer and by a second binder layer; preferably by a second binder layer of SiC.

In a particular embodiment, the continuous composite surface of the present invention is porous.

In a particular embodiment, the continuous composite surface of the present invention has a uniform porosity among its surface. Said porosity is preferably between 40 and 99%, preferably of between 70 and 99%, more preferably of between 80 and 98%; even more preferably between 90 and 98 %.

In a more particular embodiment, the continuous composite surface obtainable by the method described above has a surface area of between 0,01 and 0,5 m²; preferably between 0,01 and 0,2 m²; more preferably between 0,01 and 0,05 m².

In a more particular embodiment, the continuous composite surface obtainable by the method described above further comprises one or more layers of additional coatings. Said one or more layers of additional coatings selected from a water repellant coating, a washcoating, a catalytic coating and combinations thereof.

In a more particular embodiment, the continuous composite surface obtainable by the method described above further comprises one or more layers of additional coatings applied in one or more additional coating steps. Preferably, said layers of additional coatings are applied by dip coating, spray coating, vapor deposition and brush coating techniques.

In the context of the present invention the expression "water repellant coating" refers to a coating with a water repelling material. Non limiting examples of water repellant materials are polytetrafluoroethylene (PTFE) as those available from Dyneon LLC, Aston, P A.

In the context of the present invention the expression "washcoatings" refers to a coating with a metal oxide and/or metal nonoxide materials in particulate or sol forms. The wash-coat can be in the form of an aqueous or organic solvent slurry dispersion or as a aqueous or organic solvent-based solution over a range of viscosities and formulations. Non-limiting examples of useful wash-coats include water-based solutions of "ONDE0- 25 NALCO 1050", "ONDEO-NALCO 1042" or "ONDEO-NALCO 2329" silica (silicon oxide) sols, available from the ONDEO-NALCO Company, Naperville, IL. Other non -limiting examples of wash-coats are, for example, a mixture of a sol such as, but not limited to, "NALCO 1 050" silica sol in with (i) a metal-oxide or metal non-oxide powder, or (ii) a metal-oxide or metal non-oxide precursor sol, or (iii) a metal oxide or metal nonoxide dispersion. Such mixtures can be stirred, blended, or otherwise agitated to provide a solution or homogeneous dispersion. Non-limiting examples of metal oxides and metal non-oxides include, but are not limited to, aluminum oxide, zirconium oxide, silicon carbide, silicon oxide, titanium dioxide, and combinations thereof.

In an even more particular embodiment, the continuous composite surface obtainable by the method described above further comprises one or more layers of a catalytic coating.

In the context of the present invention the expression "catalytic coatings" refers to a coating of catalysts to assist in the reduction of pollutants such as NOx or CO in the exhaust from combustion. Non-limiting examples of catalytic coatings are catalyst precursors, catalytic materials or a combination thereof.

Non limiting examples of catalytic materials suitable for the present invention include materials comprising metals such as platinum, palladium, rhodium, iron, nickel, silver, ruthenium, copper, gold, zirconium and combinations and alloys of these metals and compounds of these metals and metal oxides such as iron oxide, copper oxide, alkaline earth oxides, and alkaline earth aluminates, rare earth oxides, rare earth aluminates, cerium oxide, vanadium oxide, manganese oxide, cobalt oxide, zirconia, first row transition metal - rare earth oxide compounds and mixtures, oxides having perovskite and perovskite-related crystal structures, metal phosphates and phosphate- oxide mixtures, and NOx reduction catalysts (for example, rhodium supported on alumina, ceria, ceriazirconia or alumina-ceria), and combinations thereof. The catalyst(s) may be present as particles of catalyst material(s) or catalyst material(s) on support particles, where the particles are adsorbed on the surface of the continuous composite surface.

In one embodiment, the catalytic metal or metal compound of the one or more layers of the catalytic coating may be applied as a metal salt solution. The metal salt may then be, for example, chemically altered (for example, chemically reduced) to the active metal form, or thermally decomposed to the active metal form, and adsorbed onto the continuous composite surface. In another embodiment, the catalytic metal or metal compound of the one or more layers of a catalytic coating may be applied to the continuous composite surface in the form of a colloidal dispersion or adsorbed on a colloidal carrier by dipping or other impregnation techniques. Catalytic metals or metal compounds may also be applied to the continuous composite surface by conventional gas phase deposition techniques.

### Burner surface

In another aspect, the present invention is directed to a burner surface obtainable by the method comprising the steps of
i) providing the continuous composite surface as defined in any of the embodiments above; and
ii) perforating the continuous composite surface to obtain a burner surface.

Without being bound to any theory in particular, the authors of the present invention believe that the use of a burner surface comprising a continuous composite surface comprising ceramic fibers increases the strength, durability and resistance to high temperatures of the burner surface of the present invention. The authors of the present invention have observed that the use of a continuous composite surface comprising uniformly dispersed ceramic fibers leads to a burner surface with a uniform porosity. The authors of the present invention have observed that the use of a continuous composite surface comprising ceramic fibers and a second binder leads to a durable and resistant burner surface.

In the context of the present invention the expression, "perforating the continuous composite surface" refers to making perforations, holes, openings, apertures and/or slits in the continuous composite surface.

Without being bound to any theory in particular, the authors of the present invention believe that when the perforations are created in the continuous composite surface to obtain a burner surface, said perforations do not disturb the distribution of the ceramic fibers and the porosity of said burner surface.

In a particular embodiment, the burner surface of the present invention is a gas boiler burner surface.

In a particular embodiment, the burner surface of the present invention is porous preferably having porosity values between 70 and 99 %, preferably between 80 and 98 %; more preferably between 90 and 95%.

Without being bound to any theory in particular, the authors of the present invention believe that when the porosity of the burner surface is over 70% the pressure loss in the burner surface is reduced.

In a particular embodiment, the burner surface of the present invention further comprises apertures; preferably at least 100 apertures; preferably at least 300 apertures; more preferably at least 800 apertures.

The number or pattern of apertures in the burner surface of the present invention may be tailored to provide the desired efficiency for the application.

In a more particular embodiment, the apertures of the burner surface of the present invention have a continuous diameter throughout its length.

In a more particular embodiment, the apertures of the burner surface of the present invention are less than 60% of the volume of the burner surface; preferably less than 50%, more preferably less than 40%, even more preferably less than 30%.

In a particular embodiment, the apertures of the burner surface of the present invention follow a pattern or a logo.

For example, patterns or logos can be used to adjust the efficiency, change the pressure drop, and/or strengthen the burner surface without changing the overall size of the burner plate.

In the present invention, the burner surface is obtainable by the method described above that comprises a step (ii) of perforating the continuous composite surface to obtain a burner surface.

In a particular embodiment, the perforation of step (ii) is performed by a perforation technique selected from laser, pins, die, punch, hydro jet and combinations thereof, preferably by a laser perforation technique.

In a particular embodiment, the perforation of step (ii) is performed by means of a laser equipment; preferably by means of a punch laser machine; more preferably by means of a CO₂ punch laser machine.

In a particular embodiment, the perforation of step (ii) is performed by using a software. A non-limiting example of software suitable for the present invention is Computer Aid Design (CAD).

In a particular embodiment, the burner surface of the present invention further comprises laser apertures; preferably laser apertures with diameters below 2 mm.

In a particular embodiment, the laser apertures of the burner surface of the present invention have a continuous diameter through their length.

In a particular embodiment, the laser apertures of the burner surface of the present invention have a larger diameter or opening near the top surface of the burner surface and a smaller diameter or opening near the bottom surface.

Without being bound to any theory in particular, the authors of the present invention believe that when said laser apertures have a larger diameter or opening near the top surface of the burner surface and a smaller diameter or opening near the bottom surface of the burner surface, during a combustion the flames are held closer to the top surface of the burner surface reducing the emissions generated during combustion. Without being bound to any theory in particular, the authors of the present invention believe that the presence of apertures help to held the flame and modulating the burner combustion at different burning conditions.

### Burner assembly

In another aspect, the present invention is directed to a burner assembly comprising
- a housing having a plenum chamber;
- a gas inlet port connected to the housing; and
- the burner surface as defined in any of the embodiments above.

In the context of the present invention the expressions "plenum chamber", "gas inlet port" have the meanings commonly known in the art.

In a particular embodiment, the burner assembly of the present invention is a radiant burner assembly.

In a particular embodiment, the burner assembly of the present invention is a blue flame burner assembly.

### Methods

In another aspect, the present invention is directed to a method for the preparation of the continuous composite surface of the present invention, comprising the steps of:
i) providing a dispersion comprising
   a. ceramic fibers;
   b. at least one polymeric first binder; and
   c. a solvent;
ii) suctioning said dispersion through a frame to obtain a nonwoven layer comprising said ceramic fibers and said at least one polymeric first binder; wherein said frame has no protrusions;
iii) heating said nonwoven layer obtained in step (ii) at a temperature high enough to decompose said at least one polymeric first binder from said nonwoven layer to obtain a nonwoven fabric; and
iv) coating by vapor deposition the nonwoven fabric obtained in step (iii) with a second binder to obtain a continuous composite surface.

In a particular embodiment, the method for the preparation of a continuous composite surface of the present invention comprises the steps of:
i) providing a dispersion comprising
   a. ceramic fibers;
   b. at least one polymeric first binder; and
   c. a solvent;
ii) suctioning said dispersion through a frame to obtain a nonwoven layer comprising said ceramic fibers and said at least one polymeric first binder, wherein said frame has no protrusions;
iii) heating said nonwoven layer obtained in step (ii) at a temperature high enough to decompose said at least one polymeric first binder from said nonwoven layer to obtain a nonwoven fabric; and coating said nonwoven fabric with a carbon layer by vapor deposition to obtain a nonwoven fabric coated with a carbon layer; and
iv) coating by vapor deposition the nonwoven fabric coated with a carbon layer obtained in step (iii) with a second binder to obtain a continuous composite surface.

In a more particular embodiment, the method for the preparation of a continuous composite surface of the present invention comprises the steps of:
i) providing a dispersion comprising
   a. ceramic fibers;
   b. at least one polymeric first binder; and
   c. a solvent;
ii) suctioning said dispersion through a frame to obtain a nonwoven layer comprising said ceramic fibers and said at least one polymeric first binder, wherein said frame has no protrusions; and
   stabilizing, drying and demolding said nonwoven layer obtained by suctioning;
iii) heating said nonwoven layer obtained in step (ii) at a temperature high enough to decompose said at least one polymeric first binder from said nonwoven layer to obtain a nonwoven fabric; and
   coating said nonwoven fabric with a carbon layer by vapor deposition to obtain a nonwoven fabric coated with a carbon layer; and
iv) coating by vapor deposition the nonwoven fabric coated with a carbon layer obtained in step (iii) with a second binder to obtain a continuous composite surface.

In another aspect, the present invention is directed to a method for the preparation of a burner surface comprising the steps of:
i) providing the continuous composite surface as defined in any of the embodiments above; and
ii) perforating the continuous composite surface to obtain a burner surface.

### Uses

In another aspect, the present invention is directed to the use of a burner surface as defined in any of the embodiments above in boilers, water heaters and/or cooking burners.

In another aspect, the present invention is directed to the use of a burner assembly as defined in any of the embodiments above in boilers, water heaters and/or cooking burners.

The burner surface, the burner assembly, the method for the preparation of a continuous composite surface, the method for the preparation of a burner surface, the use of a burner surface and the use of a burner assembly present all the advantages and characteristics as defined above for the continuous composite surface of the present invention in any of its embodiments.

### EXAMPLES

The invention is illustrated by means of the following examples which in no case limit the scope of the invention.

### Example 1: Preparation of a continuous composite surface comprising silicon carbide (SiC) fibers and a SiC binder.

A continuous composite surface was prepared according to a "pulp molding" technology based in the conventional technology employed by the paper industry, as follows. Silicon carbide (SiC) ceramic fibers obtained under the trademark designation "NICALON SIC FIBER" from COI Ceramics Company were used. The SiC fibers were dispersed in water at a concentration of between 0.2 g/dm³ and 2 g/dm³ by applying mechanical energy using a disperser in an open vessel. Poly (vinyl alcohol) (PVA) was also added to the dispersion as a first binding agent at a 5 % in weight over the final weight of the nonwoven layer. Also, the viscosity of the dispersion was adjusted to a value between 50 cps and 1000 cps.

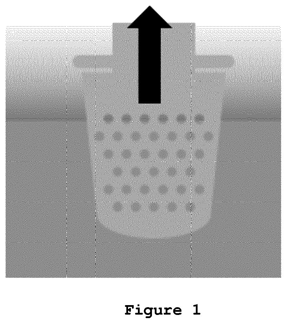

A pulp molding mold comprising two halves: a male half (convex) and a female half (concave), was used to create a nonwoven layer. The male half comprises perforations able for suctioning (Figure 1) and, optionally, a stainless steel mesh filter can be attached and fixed on its external surface. Neither the male nor the female halves used comprised protrusions and/or pins. Additionally, the pulp molding mold used can be adapted to create a flat or 3D shaped nonwoven layers with different shapes.

Then, a nonwoven layer comprising the ceramic fibers and PVA with a thickness between 1-10 mm was formed by suction dewatering the dispersion. Said nonwoven layer was formed on the external mold frame surface under a difference in pressure of between 5 mbar and 200 mbar bar during 20 seconds created by suction with a vacuum pump. The nonwoven layer was stabilized and dried under heating at a temperature between 50 and 100 °C. Then, the nonwoven layer was demolded by applying pressurized air.

The nonwoven layer was heated to a temperature between 200 °C and 1090°C during 12 hours in a chemical vapor deposition (CVD) oven to decompose the PVA (first binder) by pyrolyzing it in a N₂ atmosphere. A carbonaceous residue was left on the nonwoven fabric created by this step.

Then, a SiC layer is deposited on the surface of the nonwoven layer by chemical vapor deposition using a mixture of trimethylsilane (MTS) and N₂ gas in a ratio of 1:10 parts as precursor at 1075°C under a pressure of below 100 mbar during 15 hours to form a continuous composite surface comprising SiC fibers and a first pyrolytic carbon layer and a second SiC binder layer with porosity values between 80 and 98%.

### Example 2: Preparation of a continuous composite surface comprising SiC fibers, a pyrolytic carbon layer and a SiC binder layer.

A continuous composite surface was prepared according to the procedure described in Example 1 but adding a pyrolytic carbon layer which was deposited by chemical vapor deposition on the surface of the nonwoven fabric using methane as precursor gas at between 900 and 1100°C before depositing the second binder (SiC). Results showed an improved deposition of SiC when a layer of pyrolytic carbon is added to the continuous composite surface.

### Example 3: Preparation of a continuous composite surface comprising SiC fibers.

A continuous composite surface was prepared according to the procedures described in Examples 1 and 2 but using organic PVA fibers obtained under the trademark designation "Kuralon" from Kuraray Company, instead of PVA. Additionally, the dispersion was heated at a temperature between 100 and 300 °C while forming the nonwoven layer.

### Example 4 : Preparation of a continuous composite surface comprising silicon carbide (SiC) fibers.

A continuous composite surface was prepared according to the procedures described in Examples 1 and 2 but using silicon carbide(SiC) fibers obtained under the trademark designation "Tyranno Fiber" from UBE Industries, Ltd. Company were used instead of SiC fibers.

### Example 5 : Preparation of a continuous composite surface comprising aluminum borosilicate fibers.

A continuous composite surface was prepared according to the procedures described in Examples 1 and 2 but using aluminum borosilicate fibers with diameters between 10 and 26 microns obtained under the trademark designation "3M NEXTEL 312" from 3M Company, instead of SiC fibers.

### Example 6: Preparation of a continuous composite surface comprising silica fibers.

A continuous composite surface was prepared according to the procedures described in Examples 1 and 2 but using silica (SiO₂) fibers with diameters between 5 and 15 microns obtained under the trademark designation "Belcotex" from Belchem Company, instead of SiC fibers.

### Example 7: Preparation of a burner surface.

The continuous composite surface s prepared according to the procedures described in Examples 1-6 were perforated by using a die machine to obtain burner surfaces. Different patterns are able to be performed by die perforation.

### Example 8: Preparation of a burner surface.

Continuous composite surfaces prepared according to the procedures described in Examples 1-5 were perforated by a laser punch machine (TruMatic model from Trumpf company) to obtain burner surfaces. Different aperture shapes and diameters, and complex patterns are able to be performed by laser perforation.

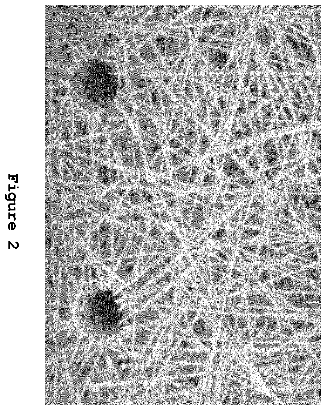

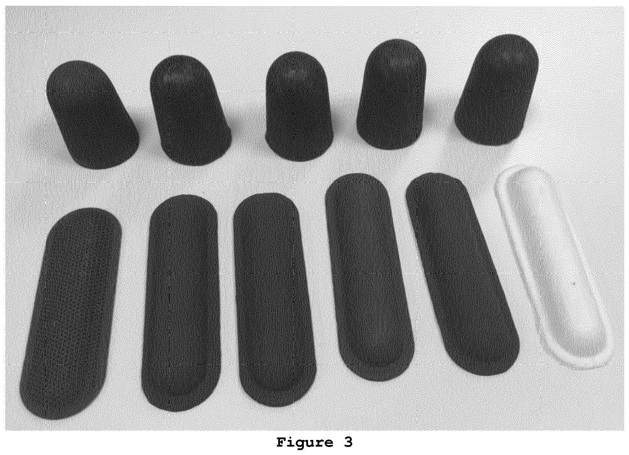

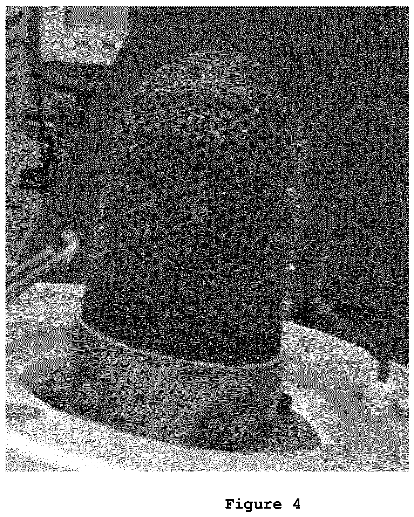

Figure 2 shows an optical micrograph of a burner surface. It can be seen in Figure 2 a homogeneous distribution of ceramic fibers in the burner surface creating a uniform distribution of pores. Additionally, clean apertures with diameters below 1 mm performed by laser are shown in figure 2. The distribution of the fibers in the surface is not perturbed by the apertures and, therefore, the porosity is not modified. Figure 3 shows differently shaped burner surfaces comprising ceramic fibers of silica (white burner surfaces) or comprising SiC fibers (black surfaces). Figure 4 shows a burner assembly comprising a burner surface performing a combustion reaction.

### Example 9: Comparative example.

A continuous composite surface A was prepared according to the procedure described in Example 1. In addition, continuous composite surfaces B and C were prepared in a similar way but using a solgel inorganic binder and colloidal silica binder respectively to join the fibers and without applying a SiC layer. Then, the characteristics of the different surfaces were studied by scanning electron microscopy.

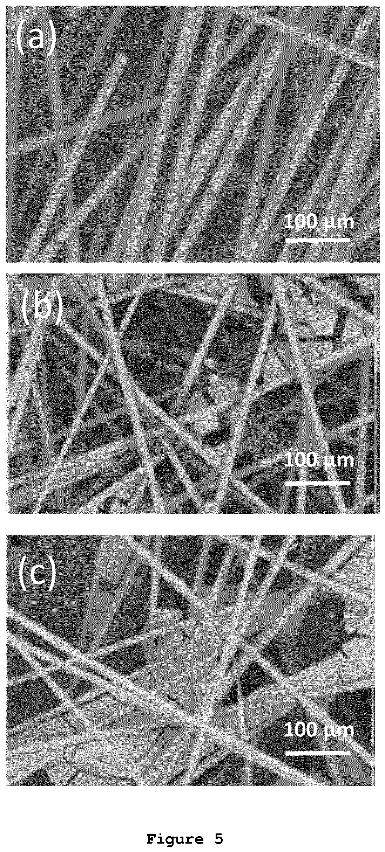

Figure 5 shows scanning electron microscopy micrographs of surfaces A, B and C. Figure 5a shows a homogeneous and continuous coating of SiC on the fibers and also clean pores formed in the fiber interstices of surface A. Figure 5b shows that the use of a solgel binder leads to a non-homogeneous and fragmented coating of the fibers in surface B. Similarly, Figure 5c shows a non-homogeneous and fragmented coating of the fibers in surface C. Moreover, Figures 5b and 5c show that some of the pores are clogged in surfaces B and C.

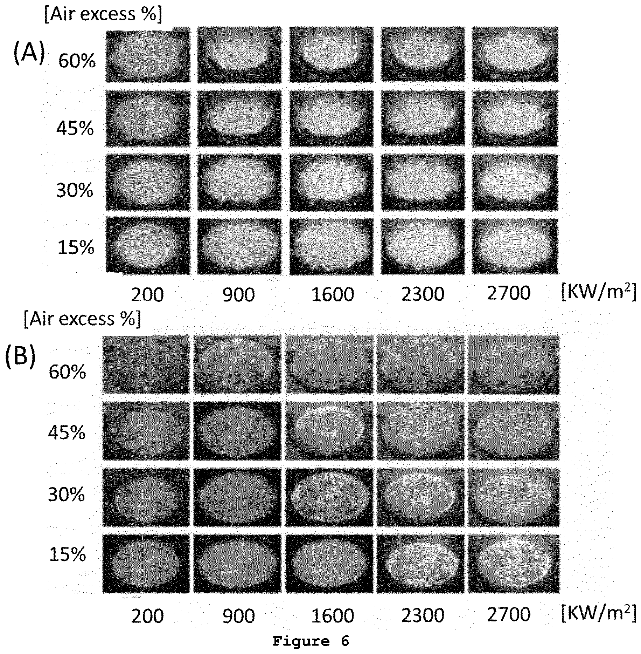

Figure 6a and 6b show burner assemblies (comprising burner surfaces A and C respectively) performing a combustion reaction at different conditions (air excess expressed in air excess % and heat flux density (kW/m²) using surfaces A (Figure 5a) and C (Figure 5b). As can be observed, the combustion matrix of surface A (Figure 6a) shows an homogeneous performance of the flame in all conditions while the combustion matrix of surface B (Figure 6b) shows the appearance of hot and cold points and inhomogeneities in the combustion flame.

### Example 10: Preparation of surfaces using different first binders.

Three flat burner surfaces have been prepared following the procedure described in example 1 but using different first binder agents: poly(vinyl alcohol) (PVA); polyimide (PI) and dextrin. After heating the nonwoven layers to a temperature between 200 °C and 1090°C during 12 hours in a chemical vapor deposition (CVD) oven to decompose the first binders by pyrolyzing them in a N₂ atmosphere, the amount of carbonaceous residue left on the nonwoven fabrics was studied.

When using poly(vinyl alcohol) (PVA) or dextrin, the carbonaceous residue left is below the 10 wt.% of the initial amount of binder used. However, the carbonaceous residue left by the polyimide is between a 40 wt% and 60 wt% of the initial amount of binder.

The authors have observed that the porosity % and/or the types of pores in the nonwoven layer and in the burner surfaces change depending of the type of binder used.

### Example 11: Preparation of a 3D surfaces.

3D burner surfaces were prepared following the procedure described in example 1 but using cellulose as a first binder agent. Cellulose has been added in different percentages up to 50 % in weight over the final weight of the nonwoven layer. It has been observed that the amount of carbonaceous residue left on the nonwoven fabric when using cellulose is around 30 wt%.

Moreover, the authors have observed that the use of cellulose as a first binder enhances the initial ceramic fiber dispersion and helps the demolding and extraction of the 3D shaped nonwoven layers. In addition, it has been observed that the microstructure of the nonwoven layer was maintained after the pyrolysis step.

## Claims

1. A continuous composite surface suitable for a burner surface, obtainable by the method comprising the steps of
i) providing a dispersion comprising
a. ceramic fibers;
b. at least one polymeric first binder; and
c. a solvent;
ii) suctioning said dispersion through a frame to obtain a nonwoven layer comprising said ceramic fibers and said at least one polymeric first binder, wherein said frame has no protrusions;
iii) heating said nonwoven layer obtained in step (ii) at a temperature high enough to decompose said at least one polymeric first binder from said nonwoven layer to obtain a nonwoven fabric; and
iv) coating by vapor deposition the nonwoven fabric obtained in step (iii) with a second binder to obtain a continuous composite surface.

2. The continuous composite surface according to claim 1, wherein step (iii) further comprises coating by vapor deposition the nonwoven fabric with a carbon layer to obtain a carbon coated nonwoven fabric.

3. The continuous composite surface according to any of claims 1 or 2, wherein the heating of step (iii) is performed by pyrolyzing said at least one polymeric first binder.

4. The continuous composite surface according to any of claims 1 to 3, wherein said at least one polymeric first binder of step (i) is not in the form of beads; and wherein the nonwoven layer of step (ii) comprises between 1 and 60 wt% of said at least one polymeric first binder.

5. The continuous composite surface according to any of claims 1 to 4, wherein said second binder of step (iv) is a ceramic binder, preferably silicon carbide (SiC).

6. The continuous composite surface according to any of claims 1-5, wherein said continuous composite surface comprises ceramic fibers as the major filler; preferably as the only filler.

7. The continuous composite surface according to claim 6 wherein said continuous composite surface comprises ceramic fibers in at least 50 wt%.

8. The continuous composite surface according to any of claims 1-7, wherein said continuous composite surface has porosity values between 80 and 98%.

9. The continuous composite surface according to any of claims 1-8 further comprising one or more layers of additional coatings selected from a water repellant coating, a wash coating, a catalytic coating and combinations thereof.

10. A burner surface obtainable by the method comprising the steps of
i) providing the continuous composite surface as defined in any of claims 1-9; and
ii) perforating the continuous composite surface to obtain a burner surface.

11. The burner surface according to claim 10 wherein the perforation of step (ii) is performed by a laser perforation technique.

12. A burner assembly comprising
- a housing having a plenum chamber;
- a gas inlet port connected to the housing; and
- the burner surface as defined in any of claims 10 or 11.

13. A method for the preparation of a continuous composite surface comprising the steps of:
i) providing a dispersion comprising
a. ceramic fibers;
b. at least one polymeric first binder; and
c. a solvent;
ii) suctioning said dispersion through a frame to obtain a nonwoven layer comprising said ceramic fibers and said at least one polymeric first binder; wherein said frame has no protrusions;
iii) heating said nonwoven layer obtained in step (ii) at a temperature high enough to decompose said at least one polymeric first binder from said nonwoven layer to obtain a nonwoven fabric; and
iv) coating by vapor deposition the nonwoven fabric obtained in step (iii) with a second binder to obtain a continuous composite surface.

14. A method for the preparation of a burner surface comprising the steps of:
i) providing the continuous composite surface as defined in any of claims 1-9; and
ii) perforating the continuous composite surface to obtain a burner surface.

15. The use of a burner surface as defined in any of claims 10 or 11 or of a burner assembly as defined in claim 12 in boilers, water heaters and/or cooking burners.

## Patentansprüche

1. Zusammenhängende Verbundwerkstoffoberfläche, die für eine Brenneroberfläche geeignet ist, die durch das Verfahren erhältlich ist, das die folgenden Schritte unfasst:
i) Bereitstellen einer Dispersion, die umfasst:
a. Keramikfasern;
b. wenigstens ein erstes Polymerbindemittel; und
c. ein Lösungsmittel;
ii) Ansaugen der Dispersion durch einen Rahmen, um eine Vliesschicht, welche die Keramikfasern und das wenigstens eine erste Polymerbindemittel umfasst, zu erhalten, wobei der Rahmen keine Vorsprünge hat;
iii) Erhitzen der in Schritt (ii) erhaltenen Vliesschicht auf eine Temperatur, die hoch genug ist, um das wenigstens eine erste Polymerbindemittel aus der Vliesschicht zu zersetzen, um einen Vliesstoff zu erhalten; und
iv) Beschichten des in Schritt (iii) erhaltenen Vliesstoffs mit einem zweiten Bindemittel durch Dampfabscheidung, um eine zusammenhängende Verbundwerkstoffoberfläche zu erhalten.

2. Zusammenhängende Verbundwerkstoffoberfläche nach Anspruch 1, wobei der Schritt (iii) ferner das Beschichten des Vliesstoffs mit einer Karbonschicht durch Dampfabscheidung umfasst, um einen karbonbeschichteten Vliesstoff zu erhalten.

3. Zusammenhängende Verbundwerkstoffoberfläche nach einem der Ansprüche 1 oder 2, wobei das Heizen von Schritt (iii) durch Pyrolysieren des wenigstens einen ersten Polymerbindemittels durchgeführt wird.

4. Zusammenhängende Verbundwerkstoffoberfläche nach einem der Ansprüche 1 bis 3, wobei das wenigstens eine erste Polymerbindemittel von Schritt (i) nicht die Form von Perlen hat; und wobei die Vliesschicht von Schritt (ii) zwischen 1 und 60 Gewichts-% des wenigstens einen ersten Polymerbindemittels umfasst.

5. Zusammenhängende Verbundwerkstoffoberfläche nach einem der Ansprüche 1 bis 4, wobei das zweite Bindemittel von Schritt (iv) ein keramisches Bindemittel, vorzugsweise Siliziumkarbid (SiC), ist.

6. Zusammenhängende Verbundwerkstoffoberfläche nach einem der Ansprüche 1 - 5, wobei die zusammenhängende Verbundwerkstoffoberfläche Keramikfasern als den Hauptfüllstoff, vorzugsweise als den einzigen Füllstoff, umfasst.

7. Zusammenhängende Verbundwerkstoffoberfläche nach Anspruch 6, wobei die zusammenhängende Verbundwerkstoffoberfläche wenigstens 50 Gewichts-% Keramikfasern umfasst.

8. Zusammenhängende Verbundwerkstoffoberfläche nach einem der Ansprüche 1 - 7, wobei die zusammenhängende Verbundwerkstoffoberfläche Porositätswerte zwischen 80 und 98% hat.

9. Zusammenhängende Verbundwerkstoffoberfläche nach einem der Ansprüche 1 - 8, die ferner eine oder mehrere Schichten zusätzlicher Beschichtungen umfasst, die aus einer wasserabweisenden Beschichtung, einer Waschbeschichtung, einer katalytischen Beschichtung und Kombinationen daraus ausgewählt sind.

10. Brenneroberfläche, die durch das Verfahren erhältlich ist, das die folgenden Schritte umfasst:
i) Bereitstellen der zusammenhängenden Verbundwerkstoffoberfläche wie in einem der Ansprüche 1 - 9 definiert; und
ii) Perforieren der zusammenhängenden Verbundwerkstoffoberfläche, um eine Brenneroberfläche zu erhalten.

11. Brenneroberfläche nach Anspruch 10, wobei die Perforation von Schritt (ii) durch ein Laserperforationsverfahren durchgeführt wird.

12. Brenneranordnung, die umfasst:
- ein Gehäuse mit einer Plenumkammer;
- einen Gaseinlassanschluss, der mit dem Gehäuse verbunden ist; und
- die Brenneroberfläche, wie in einem der Ansprüche 10 oder 11 definiert.

13. Verfahren zur Herstellung einer zusammenhängenden Verbundwerkstoffoberfläche, das die folgenden Schritte umfasst:
i) Bereitstellen einer Dispersion, die umfasst:
a. Keramikfasern;
b. wenigstens ein erstes Polymerbindemittel; und
c. ein Lösungsmittel;
ii) Ansaugen der Dispersion durch einen Rahmen, um eine Vliesschicht, welche die Keramikfasern und das wenigstens eine erste Polymerbindemittel umfasst, zu erhalten, wobei der Rahmen keine Vorsprünge hat;
iii) Erhitzen der in Schritt (ii) erhaltenen Vliesschicht auf eine Temperatur, die hoch genug ist, um das wenigstens eine erste Polymerbindemittel aus der Vliesschicht zu zersetzen, um einen Vliesstoff zu erhalten; und
iv) Beschichten des in Schritt (iii) erhaltenen Vliesstoffs mit einem zweiten Bindemittel durch Dampfabscheidung, um eine zusammenhängende Verbundwerkstoffoberfläche zu erhalten.

14. Verfahren zur Herstellung einer Brenneroberfläche, das die folgenden Schritte umfasst:
i) Bereitstellen der zusammenhängenden Verbundwerkstoffoberfläche wie in einem der Ansprüche 1 - 9 definiert; und
ii) Perforieren der zusammenhängenden Verbundwerkstoffoberfläche, um eine Brenneroberfläche zu erhalten.

15. Verwendung einer Brenneroberfläche, wie in einem der Ansprüche 10 oder 11 definiert oder einer Brenneranordnung wie in Anspruch 12 definiert, in Durchlauferhitzern, Warmwasserbereitern und/oder Kochbrennern.

## Revendications

1. Une surface composite continue adaptée à une surface de brûleur, apte à être obtenue par le procédé comprenant les étapes consistant à
i) fournir une dispersion comprenant
a. des fibres céramiques ;
b. au moins un premier liant polymère ; et
c. un solvant ;
ii) aspirer ladite dispersion à travers un cadre pour obtenir une couche non tissée comprenant lesdites fibres céramiques et ledit au moins un premier liant polymère, ledit cadre n'ayant pas de protubérances ;
iii) chauffer ladite couche non tissée obtenue à l'étape (ii) à une température suffisamment élevée pour décomposer ledit au moins un premier liant polymère de ladite couche non tissée de façon à obtenir un étoffe non tissée ; et
iv) enduire par dépôt en phase vapeur l'étoffe non tissée obtenue à l'étape (iii) d'un deuxième liant, de façon à obtenir une surface composite continue.

2. La surface composite continue selon la revendication 1, dans laquelle l'étape (iii) comprend en outre le fait de revêtir par dépôt en phase vapeur l'étoffe non tissée d'une couche de carbone pour obtenir une étoffe non tissée revêtue de carbone.

3. La surface composite continue selon l'une quelconque des revendications 1 ou 2, dans laquelle le chauffage de l'étape (iii) est mise en œuvre en pyrolysant ledit au moins un premier liant polymère.

4. La surface composite continue selon l'une quelconque des revendications 1 à 3, dans laquelle ledit au moins un premier liant polymère de l'étape (i) n'est pas sous forme de billes ; et dans laquelle la couche non tissée de l'étape (ii) comprend entre 1 et 60 % en poids dudit au moins un premier liant polymère.

5. La surface composite continue selon l'une quelconque des revendications 1 à 4, dans laquelle ledit deuxième liant de l'étape (iv) est un liant céramique, de préférence du carbure de silicium (SiC).

6. La surface composite continue selon l'une quelconque des revendications 1 à 5, dans laquelle ladite surface composite continue comprend des fibres céramiques en tant que charge principale ; de préférence comme étant la seule charge.

7. La surface composite continue selon la revendication 6, dans laquelle ladite surface composite continue comprend des fibres céramiques à hauteur d'au moins 50 % en poids.

8. La surface composite continue selon l'une quelconque des revendications 1 à 7, dans laquelle ladite surface composite continue a des valeurs de porosité comprises entre 80 et 98 %.

9. La surface composite continue selon l'une quelconque des revendications 1 à 8, comprenant en outre une ou plusieurs couches de revêtements supplémentaires choisis parmi un revêtement hydrofuge, un revêtement de lavage, un revêtement catalytique et les combinaisons de ceux-ci.

10. Une surface de brûleur apte à être obtenue par le procédé comprenant les étapes consistant à :
i) fournir la surface composite continue telle que définie dans l'une quelconque des revendications 1 à 9 et
ii) perforer la surface composite continue afin d'obtenir une surface de brûleur.

11. La surface de brûleur selon la revendication 10, dans laquelle la perforation de l'étape (ii) est mise en œuvre par une technique de perforation au laser.

12. Un ensemble formant brûleur comprenant
- un boîtier ayant une chambre formant plenum ;
- un orifice d'entrée de gaz relié au boîtier ; et
- la surface du brûleur telle que définie dans l'une quelconque des revendications 10 ou 11.

13. Un procédé de préparation d'une surface composite continue, comprenant les étapes consistant à :
i) fournir une dispersion comprenant
a. des fibres céramiques ;
b. au moins un premier liant polymère ; et
c. un solvant ;
ii) aspirer ladite dispersion à travers un cadre pour obtenir une couche non tissée comprenant lesdites fibres céramiques et ledit au moins un premier liant polymère ; ledit cadre n'a pas de protubérances ;
iii) chauffer ladite couche non tissée obtenue à l'étape (ii) à une température suffisamment élevée pour décomposer ledit au moins un premier liant polymère de ladite couche non tissée de façon à obtenir une étoffe non tissée ; et
iv) enduire par dépôt en phase vapeur l'étoffe non tissée obtenue à l'étape (iii) d'un deuxième liant de façon à obtenir une surface composite continue.

14. Un procédé de préparation d'une surface de brûleur comprenant les étapes consistant à :
i) fournir la surface composite continue telle que définie dans l'une quelconque des revendications 1 à 9 ; et
ii) perforer la surface composite continue afin d'obtenir une surface de brûleur.

15. L'utilisation d'une surface de brûleur telle que définie dans l'une quelconque des revendications 10 ou 11 ou d'un ensemble formant brûleur tel que défini dans la revendication 12 dans des chaudières, des chauffe-eau et/ou des brûleurs de cuisine.
